# EUROPEAN PATENT APPLICATION

(11) **EP 1 405 707 A1**
(43) Date of publication of application: **07.04.2004**
(21) Application number: 02079071.3
(22) Date of filing: 01.10.2002
(51) Int. Cl.: B29C 45/14

(54) **Process for making a plastic moulded article with a metallized surface**

(71) Applicant: DSM IP Assets B.V., 6411 TE Heerlen (NL)
(72) Inventor: Guns, Johannes Jacobus, 6003 CA Weert (NL); Frissen, Richard Jacques Theodoor, 6171 WX Stein (NL)
(74) Representative: Krijgsman, Willem

(57) **Abstract**

The invention relates to a process for making a plastic moulded article with a metallized surface, comprising the steps of introducing a metallized film in a mould and filling the mould with a plastic composition by means of injection moulding, with the metallized film comprising at least one layer consisting essentially of a thermoplastic elastomer containing polyether segments. Advantages of this process are amongst other things that a 3-dimensional (3-D) metallized moulded article may be made with the film adequately adhering everywhere to the plastic composition, and that the moulded article can also be provided with a surface with soft-touch properties.

The invention also relates to a plastic moulded article with an at least partially metallized surface and to such an article that is further provided with laser markings.

## Description

The invention relates to a process for making a plastic moulded article with a metallized surface, comprising the steps of
(a) introducing a metallized film in a mould; and
(b) filling the mould with a plastic composition by means of injection moulding.

The invention also relates to a plastic moulded article with a metallized surface and a metallized moulded article that is also provided with laser markings, and end-use products that contain such moulded articles.

Such a process is known from patent application WO 98/51516 A1. This publication discloses a process for the manufacture of decorative articles by utilising a decorative metallized film. In this publication, the decorative metallized film is based on mixture of fluorine resins. Fluorine resins are known for their stain resistance and non-sticking character. In order to obtain good adhesion of the decorative metallized film with a substrate an additional, adhesive layer is used to improve adhesion between the decorative metallized film and the substrate.

A disadvantage of the known process described by WO 98/51516 A1 is that an adhesive layer has to be used so as to obtain a 3-dimensional (3-D) moulded article with a metallized surface, in which the metallized film shows adequate adhesion to the plastic composition, also at edges and other places where the film is substantially deformed.

The object of the invention is to provide a process that does not show the aforementioned disadvantage or shows this disadvantages to a much lesser extent.

Surprisingly, this object is achieved with the process according to the invention wherein a metallized film is used, which film comprises at least one layer consisting essentially of a thermoplastic elastomer containing polyether segments.

Such a film comprising at least one layer consisting essentially of a thermoplastic elastomer containing polyether segments can be metallized with the metal layer showing good adhesion to the film, and the thermoplastic elastomer containing polyether segments shows good adhesion the plastic composition on the whole surface of a non-flat article.

EP 0296108 A1 discloses a process for making a plastic moulded article with a decorated surface wherein a copolyether amide film is employed, but that film is not decorated, especially not metallized beforehand. In this known in-mould-decoration (IMD) process, as the mould is filled, the copolyether amide film is decorated by the transfer of ink, under the influence of heat, from a decorated support film, which support film is passed into the mould together with the copolyether amide film, but does come to form part of the decorated moulded article.

In the process according to the invention the film may be metallized beforehand by various known techniques for applying a thin layer of various different types of metals, and the film can be used as such to make three dimensional (3-D) moulded articles, while the film still exhibits adequate adhesion to the plastic composition, without the use of an additional adhesive layer. Known techniques for metallizing as e.g. electroless plating, metal spraying, sputtering or vacuum metallisation are described in many handbooks, e.g. in Encyclopaedia of Polymer Science and Engineering, vol. 9, p. 580-622, Mark et al, John Wiley and Sons (1987), ISBN 0-471-80941-1. Different types of metal include copper, silver, gold, chromium, nickel, aluminium, iron, tin, zinc, lead and brass as examples. The metal layer can cover the film surface partially, completely or in the form of patterns or conductive paths. The thickness of the metal layer depends on the requirements of the application and the technique applied, but will generally range from 0.002 to 45 micrometer. EMI shielding applications e.g. often require thicker layers than those applications where reflection or a mere decorative effect is of importance.

An additional advantage of the process according to the invention is that the film remains intact also in those places where the moulded article without the film has openings, for example in those places where pushbuttons are to be mounted in a later phase, so that for example a (splash)waterproof or dustproof housing may be made for products with touch- or pushbuttons and the like. A further advantage is that, in a special embodiment wherein the metallized surface faces the surface of the plastic composition and the surface of the plastic moulded article is formed by the thermoplastic elastomer side of the metallized film, the surface of the obtained moulded article has a pleasant feel, i.e. it has a so-called soft touch character. Moreover, the surface can be also fairly rough, i.e. it can exhibit non-slip properties. This is particularly advantageous for applications such as housings of end-use products such as mobile telephones, pocket calculators, electronic organizers or personal digital assistants, kitchen machines and the like, but also for vehicle components, particularly those in the passenger compartment, such as a dashboard or parts thereof.

A metallized film is herein understood to mean a film with one side that is at least partially metallized, and which serves to impart especially technical properties rather than only a different appearance to a moulded article. With technical properties are e.g. understood conduction of electricity or heat of the moulded part as required in conductive paths in electrical circuits or a thermal shield in order to prevent hot spots on a surface of an article; reflection of e.g. light or electromagnetic waves in lamp reflectors respectively shielding against electromagnetic interference, so called EMI shielding; diffusion e.g. to provide a barrier by the metal layer against diffusion of gasses, e.g. oxygen, or moisture. Furthermore, the process may provide a wear resistant metallized surface whereby the metallized surface is covered with the thermoplastic elastomer film e.g. for making an automotive door handle. In the latter case the metallized film is introduced in the mould in step (a) of the process according to the invention in such a way that the thermoplastic polymer surface of the film faces the surface of the mould and the metallized surface of the film faces the interior of the mould, whereby in step (b) during filling of the mould with the plastic composition, the metallized surface meets the surface of the plastic composition. In such embodiments, where the plastic composition is contacted with the metallized surface of the film, rather than with the non-metallized surface, adhesion may be further enhanced by using an adhesion promotor or adhesive layer.

The film may have only a different colour than the moulded article, but may also impart a special colour effect such as a metallic appearance or a different gloss, especially when the film is only partially metallized, or if the metallized surface of film is facing the plastic composition.

The film may, in addition to at least partially being metallized, also be provided with one or more patterns, images or indicia which may be only figurative, only informative or both figurative and informative. The film may be transparent or translucent but also (almost) opaque. The film may be non-porous or have a certain porosity, it may have a smooth surface but also a surface texture may have been applied.

A layer consisting essentially of a thermoplastic elastomer containing polyether segments is herein understood to mean that the layer is made of a composition that contains as its major component at least one thermoplastic elastomer containing polyether segments, i.e. the composition generally contains more than 50 mass% of this thermoplastic elastomer, preferably more than 60, more preferably more than 70 and even more preferably more than 80 mass%, based on the total composition. The composition may also contain up to 50 mass% of other polymers, preferably not more than 40, more preferably not more than 30 and even more preferably not more than 20 mass%; such that the at least one thermoplastic elastomer forms a continuous phase of the composition. Preferably such other polymers are compatible with the thermoplastic elastomer to retain or improve mechanical and aesthetic properties. The composition may also contain any customary additives such as stabilisers, colorants, processing aids or flame-retarding compounds. Generally such additives are each present in amounts of 0,01-10 mass% based on the total composition, dependent on their function.

Suitable examples of a thermoplastic elastomer containing polyether segments are for example segmented copolymers with so-called hard and soft segments, with the soft segment being a polyether, preferably an aliphatic polyether. Such a thermoplastic elastomer containing polyether segments is hereafter also referred to as a thermoplastic elastomer or a copolymer. Preferably the soft segments comprises a polyether derived from at least one alkylene oxide, for example a poly(alkylene oxide)glycol. Such copolymers exhibit good mechanical properties across a very wide temperature range. As poly(alkylene oxide)glycol use may be made of for example poly(tetra methylene oxide)glycol or poly(tetrahydrofuran)glycol, poly(propylene oxide)glycol, especially poly(1,2-propylene oxide) glycol, poly(ethylene oxide)glycol, ethylene oxide-terminated poly(propylene oxide)glycol or combinations thereof. Such polyethers have an essentially amorphous character, a low glass transition temperature (T_{g}) and low stiffness. Preferably, the T_{g} is lower than 0°C, more preferably lower than -20°C, and most preferably lower than -30°C. The advantage hereof is high flexibility and good mechanical properties of the segmented copolymer even at low temperatures. These soft segments have in general a molecular mass of 400-6000 g/mole, preferably 500-3000 g/mole.

The hard segments in the copolymer have in general a softening temperature, i.e. a glass transition temperature or a melting temperature, higher than 100°C, more preferably higher than 150°C, and even more preferably higher than 170°C. Preferably the hard segments have a semi-crystalline character, resulting in improved chemical resistance of the copolymer. Suitable hard segments are segments based on a polyurethane, a polyamide or a polyester. The advantage of such a copolyether urethane, copolyether amide or copolyether ester thermoplastic elastomer is that they allow production of thin films with good properties, which films are transparent or at least translucent, can also be porous as a result of foaming during film making, and can be easily metallized by various techniques.

The ratio between the soft and hard segments in the thermoplastic elastomer containing polyether segments may in general vary between wide limits but is chosen particularly on the basis of the desired hardness of the copolymer. The hardness lies in general between 20 and 80 Shore D.
A low hardness is advantageous in that it results in a more flexible film, a high hardness imparts in general higher temperature resistance and better mechanical properties. Preferably, the hardness is between 30 and 75, more preferably between 35 and 70 Shore D. The advantage hereof is a good balance between different properties, such as processability, temperature resistance, mechanical properties and, if required, printability by means of various techniques.

Preferably, the copolymer is a copolyether ester, because of its favourable processing characteristics. More specifically, the hard segment is a polyester made up of repeating units derived from at least one alkylene glycol and at least one aromatic dicarboxylic acid or an ester thereof. The alkylene group contains in general 2-6 C atoms, preferably 2-4 C atoms. For the alkylene glycol are preferred ethylene glycol, propylene glycol and in particular 1,4-butylene glycol. Terephthalic acid, 1,4-naphthalene dicarboxylic acid or 4,4'-diphenyldicarboxylic acid are particularly suitable as aromatic dicarboxylic acid. If desired, other dicarboxylic acids such as isophthalic acid may also be present, this normally results in a lower melting point. Preferably the hard segment is substantially based on polyethylene terephthalate, polypropylene terephthalate and in particular on polybutylene terephthalate. The advantage hereof is good crystallisation behaviour and a high melting point, so that the copolymers may readily be processed into film and exhibit good thermal and chemical stability.

Examples and preparation of such copolymers, particularly of copolyether esters, are described in for example Handbook of Thermoplastics, etc. O. Olabishi, Chapter 17, Marcel Dekker Inc. ,New York 1997, ISBN 0-8247-9797-3, in Thermoplastic Elastomers, 2nd Ed, Chapter 8, Carl Hanser Verlag (1996) ISBN 1-56990-205-4, in Encyclopaedia of Polymer Science and Engineering, Vol. 12, Wiley & Sons, New York (1988), ISBN 0-471-80944, p.75-117 and the references cited therein.

Very good results have been obtained with a film made from at least a copolyether ester with hard segments derived from polybutylene terephthalate and soft segments derived from poly(tetra methylene oxide)glycol or ethylene oxide-terminated poly(propylene oxide)glycol. An advantage of these copolymers is their excellent heat resistance and processing behaviour. It has been found that in the process according to the invention a film made of these materials does not, or at least does not completely, soften or melt when the mould is filled with a molten polymer composition, even if it initially has a temperature above the melting point of the copolyether ester, so that the obtained moulded article has a layer of copolyether ester film over the whole (desired part of the) surface.

A metallized film may be obtained by metallisation of a film that comprises at least one layer consisting essentially of a thermoplastic elastomer containing polyether segments utilizing known techniques for metallisation. Furthermore, in the process according to the invention such metallized films are found to exhibit excellent adhesion to the moulded article, while the metallized surface is hardly affected by the injection moulding step.

The surface of the film that is metallized can be completely covered with metal or partially, e.g. in the form of patterns. An example of a pattern is a conductive path in an electrical circuit. The design and application of the partial metallisation or pattern on the film (2-dimensional) may already take into account the deformation of the film that occurs while the moulded article (3-dimensional) is made in step (b) of the process according to the invention.

In a special embodiment, the film is translucent or transparent so that the film can be positioned in the mould in such a way that the side to which the metal has been applied is contacted with the plastic composition. The advantage hereof is that the metal layer is still well visible on the article thus obtained with the process according to the invention, but not directly exposed to environmental influences or wear. In such a case the metal pattern is preferably applied on the film in mirror image.

In a preferred embodiment of the process according to the invention, the metallized film consists of a single layer that comprises a copolymer that has been metallized. The advantage hereof is technical simplicity.

In another embodiment of the process according to the invention the film comprises at least two layers, of which at least one outer layer consists essentially of a copolymer and which layer has been metallized. Such a multi layer film may be made by means of a co-extrusion process or by laminating several films. The advantage hereof is that, by using different materials for different layers, a combination of desirable film properties may be obtained. One may choose for example a copolymer that is well metallisable and provides excellent adhesion to the plastic composition in combination with another material that exhibits for example good surface properties, for example wear properties. An example of such a multi layer film is a film that has a layer consisting essentially of a copolyether ester copolymer and another layer of polycarbonate. Advantage of this combination is excellent adhesion between the layers and high gloss and wear resistance of the polycarbonate layer.

In a particular embodiment of the process according to the invention at least two layers that both consist essentially of a copolymer but of different hardness are combined. This has the advantage that the one component is chosen for good metallisability and the other component for another desired property. In this way, it is possible to provide the moulded article with for example a metallized surface with soft-touch and/or non-slip properties. Soft-touch properties may in general be obtained by making a surface layer from a material with low hardness, for example a copolymer with hardness lower than 60, preferably lower than 50, and more preferably lower than 40 Shore D, and applying a particular surface texture thereto. An example is a film containing a layer of a copolyether ester with hardness 40 Shore D and a layer of a copolyether ester with hardness 63 Shore D.

In another special embodiment of the process according to the invention, the metallized film comprises at least one layer consisting essentially of a thermoplastic elastomer containing polyether segments that is foamed; that is the layer has a porous structure, preferably a closed cell structure. The advantage hereof is that the soft-touch character of the metallized surface can be further improved and a resilient cushioning effect can be obtained. This is specifically of interest for appliances and hand-held equipment or other coverings. A porous film may be made via an extrusion process using a thermoplastic elastomer composition and a chemical or physical blowing agent.

The film thickness may vary within broad limits. Preferably, a film has a thickness greater than 0.01 mm, because otherwise the film is difficult to handle and the risk of the film tearing or wrinkling as the mould is filled is large. The film is preferably thinner than 2 or 1 mm, depending on its hardness for easier shaping into a 3-D moulded article and better adhesion to the surface of the article. Consequently, the film preferably has a thickness of 0.01-1 mm, more preferably 0.05-0.75 mm and most preferably 0.1-0.5 mm.

Prior to being introduced in the opened mould, the metallized film may be made to a suitable size by for example cutting or stamping at room temperature or at reduced temperature, for example cryogenic cutting. Such cutting or stamping may be effected with the aid of knives but also with for example a water jet or laser beam. Also, it is possible to make the film to a suitable size during or just before the injection-moulding step (b). In the latter case, the film may be fed for example continuously from a roll to the mould and injection-moulding machine.

The plastic composition may contain polymers of different chemical composition and properties. Preferably, the plastic composition is based on a polymer that is compatible or miscible with the copolymer in the film with which it is contacted as the mould is filled. A composition based on a polymer is understood to mean that said polymer is the main component of the composition, that is the polymer forms a continuous phase of the composition. The advantage hereof is that good adhesion is obtained between the plastic composition and the film. If a film containing copolyether amide is used, the plastic composition is preferably based on for example a polyamide. A copolyether urethane film has the advantage that the film shows good adhesion to various plastics.

It furthermore has been found that adhesion can be improved by raising the temperature of the mould in the process according to the invention. For this reason the mould temperature is at least 60 °C, preferably at least 90 °C, more preferably at least 120 °C, and most preferably at least 140 °C. Care should be taken, however, to avoid too high a mould temperature for a given film, since this might result in deterioration of e.g. an image present on the film or even result in melting of the film.

In the case of a copolyether ester-containing film, suitable plastic compositions are preferably based on a thermoplastic polyester or a polycarbonate, since film adhesion is than very good. Examples of suitable polyesters include polyethylene terephthalate (PET) and polybutylene terephthalate (PBT) and blends thereof. Examples of polycarbonate plastic compositions include compositions based on bisphenol-A polycarbonate (PC), and copolymers and blends thereof. Suitable compositions are for example blends of PC and PET (PC/PET), PC and PBT (PC/PBT), PBT and PET or PC and acrylonitrile/butadiene/styrene copolymers (PC/ABS). The advantage of such plastic compositions is that moulded articles are obtained with close dimensional tolerances and with very good dimensional stability across a large temperature range, which articles may be used as housings for a variety of appliances.

A particular embodiment of the invention is a process employing a combination of a copolyether ester-containing film and a plastic composition based on a PBT composition or a PC/ABS blend.

In another embodiment of the process according to the invention, the mould is filled in step (b) with a foamed plastic composition. The advantage hereof is a moulded article with low density. If the plastic composition used has a low modulus, a soft-feel moulded article is obtained that yet has a closed and metallized surface of good quality. An example of such embodiment is a process wherein a mould is filled with a polyurethane foam against a copolyether ester film.

In another suitable embodiment, the film is laser-markable, for example due to the film containing at least one radiation-sensitive colorant that changes colour under the influence of radiation from for example a laser, or because the metal layer is radiation-sensitive and markings can be made thereon. 'Colour change' includes a change of a chromatic colour into another colour, the obtaining of a colour from an uncoloured state, or the partial or complete loss of colour. The laser-markable film may also contain another additive for improving laser-markability. The advantage of these measures is that additional indicia or decorations may later be applied to a mass-produced moulded article, which indicia may be altered in a relatively simple manner, if desired even for every other article being produced. This makes it possible to impart a personal character or a unique code to a product, e.g. to personal appliances, such as a cellular telephone or a personal digital assistant.

If the film contains at least two, preferably at least three radiation-sensitive colorants, the choice of the type of laser radiation, for example, allows markings to be provided in different colours, even a multi-coloured image such as a photo of the user.

It is also possible to mark by laser radiation not the transparent or translucent film but the plastic composition underneath the film and to apply an image thereon by means of irradiation with laser light through the film, specially at a surface area not covered by a metal layer.

The invention also relates to an at least partially metallized plastic moulded article so obtainable. In particular, the invention relates to a moulded article with an at least partially metallized surface that also has soft-touch and/or non-slip properties.

The invention further relates to a plastic moulded article with an at least partly metallized surface to which other markings may be applied through laser irradiation. The advantage hereof is that, although the film is deformed 3-dimensionally, the moulded article may yet be provided with an image in any desired position and with high accuracy. Therefore, the invention also relates to such a marked and metallized plastic moulded article.

The invention also relates to an end-use product comprising a plastic moulded article according to the invention. At least part of the surface of this product consists of such an article according to the invention, especially such part that is relevant for the technical or informative/decorative function of the product, like a control panel. The advantage hereof is that the end-use product is provided with a metallized and optionally informative surface that is little prone to for example wear. Another advantage is that the end-use product may be laser-marked with unique, personal images. Yet another advantage is that the end-use product may also have soft-touch and/or non-slip properties.

Examples of end use products include 3-dimensional moulded interconnect devices (3-D MID) comprising conductive metallized paths, moulded circuit boards (MCB), lamp reflectors either for domestic/industrial appliances or cars, control panels for consumer electronics and housings with a metal layer for EMI shielding applications.

The invention is illustrated with reference to the following examples.

### Film

With the aid of a general-purpose extruder provided with a 45 mm screw and flat-film peripheral equipment, films of thickness approximately 150 µm were made from Arnitel® EM550: copolyether ester of hardness approximately 55 Shore D (DSM Engineering Plastics, NL).

### Example I

A circular sample of approximately 78 mm diameter was cut from a film made of Arnitel® EM550 This sample was placed in a Cressington Sputter Coater, type 108 Auro, after which the pressure was reduced to about 10 Pa. Argon was used to flush the Sputter Coater. During 300 seconds a current of 30 mA was applied to the Sputter Coater and a gold layer of approximately 150 nm was applied to the sample.

The sample of gold coated film was introduced in an open mould with its gold surface facing the surface of the mould. The mould contained a single mould cavity for a plaque of dimensions 70*50 mm whereby the thickness of the plaque was stepwise reduced from 3 mm to 2 mm to 1 mm. This change of thickness resulted in a stepped surface of the plaque with sharp corners at the transition from one thickness to another. The mould was held at a temperature of 120°C by means of a oil thermostat and had been mounted in an Engel 80A injection moulding machine with a general-purpose screw of diameter 22 mm.

After closing the mould, the mould cavity was filled with a molten PC/ABS plastic composition, type Xantar® CM 206 (DSM Engineering Plastics, NL), which had been pre-dried in an air circulation oven for 6 hours at 90°C. The temperature settings of the injection moulding machine were 240-250-2550-250°C from feed hopper to nozzle; the plasticizing time was approximately 5.5 sec., the injection time was approximately 1.08 sec., the cooling time was approximately 20 sec and the cycle time was approximately 28 sec. The injected quantity of plastic composition was approximately 13 grams. Such settings are consistent with the recommended standard processing conditions for this material.

On removing the moulded article from the mould, the gold coated film was found to be present all over the surface of the moulded article, including the corners at the surface without visible tears, folds or other defects. The film showed a good adhesion to the surface plaque and could not be removed from the plaque surface by scratching or tearing.

### Example II

Analogously to Example I, moulded articles were made however in this case Arnite® TV4 240 (PBT with 20 mass% of glass fibres of DSM Engineering Plastics, NL), was used as plastic composition. During moulding a mould temperature of 80 °C was used and the plasticizing, injection, cooling and cycle time were approximately 5.9, 1.07, 20 and 28 seconds respectively. All moulded articles had the appearance described earlier.

The film showed a good adhesion to the surface of the plaque and could only with difficulty be removed from the plaque surface by scratching or tearing.

### Example III

Analogously to Example II, moulded articles were made from Arnite® TV4 240. During moulding, however, a mould temperature of 120 °C was applied.

All moulded articles had the appearance described earlier. The film showed a very good adhesion to the plaque surface. It was virtually impossible to pull the film from the surface by hand, adhesion was such that the film began to tear upon pulling.

## Claims

1. Process for making a plastic moulded article with a metallized surface, comprising the steps of
(a) introducing a metallized film in a mould; and
(b) filling of the mould with a plastic composition by means of injection moulding;
**characterized in that** the metallized film comprises at least one layer consisting essentially of a thermoplastic elastomer containing polyether segments.

2. Process according to Claim 1, wherein the thermoplastic elastomer has a hardness between 30 and 75 Shore D.

3. Process according to either of Claims 1-2, wherein the thermoplastic elastomer is a copolyether ester.

4. Process according to Claim 3, wherein the copolyether ester contains hard segments that are essentially based on polybutylene terephthalate.

5. Process according to any one of Claims 1-4, wherein the thermoplastic elastomer contains soft segments derived from poly(tetra methylene oxide)glycol or ethylene oxide-terminated poly(propylene oxide)glycol.

6. Process according to any one of Claims 1-5, wherein the film is metallized by means of vacuum metallizing.

7. Process according to any one of Claims 1-6, wherein the film is transparent or translucent.

8. Process according to any one of Claims 1-7, wherein the film consists of a single layer consisting essentially of a thermoplastic elastomer containing polyether segments.

9. Process according to any one of Claims 1-7, wherein the film comprises at least two layers, of which at least an outer layer contains a thermoplastic elastomer that contains polyether segments and which has been metallized.

10. Process according to Claim 9, wherein the at least two layers each consisting essentially of a thermoplastic elastomer containing polyether segments, but of different hardness.

11. Process according to any one of Claims 1-10, wherein the film has a thickness of 0.05-0.75 mm.

12. Process according to any one of Claims 1-11, wherein a plastic composition is used that is based on a polymer that is compatible or miscible with the thermoplastic elastomer containing polyether segments.

13. Process according to Claim 12, wherein the plastic composition is based on a thermoplastic polyester and/or a polycarbonate, and the thermoplastic elastomer is a copolyether ester.

14. Process according to Claim 13, wherein the plastic composition is a thermoplastic polyester or a polycarbonate composition.

15. Process according to any one of Claims 1-14, wherein the film is laser-markable.

16. Process according to any one of Claims 1-14, wherein the plastic composition is laser-markable.

17. Process according to any one of Claims 1-16, wherein the metallized film is introduced in the mould such that its non-metallized surface is facing the plastic composition.

18. Plastic moulded article with a metallized surface obtainable with the process according to any one of the preceding claims.

19. Plastic moulded article with a metallized surface according to Claim 18, which surface also has soft-touch and/or non-slip properties.

20. Laser-markable plastic moulded article with an at least partially metallized surface obtainable by the process according to Claim 15 or 16

21. Plastic moulded article with an at least partially metallized surface obtainable by the process according to Claim 15 or 16 and provided with laser markings.

22. End-use product comprising a plastic moulded article according to any one of Claims 18-21.
